# EUROPEAN PATENT SPECIFICATION

(11) **EP 2 998 869 B1**
(45) Date of publication and mention of the grant of the patent: **07.11.2018**
(21) Application number: 15180820.1
(22) Date of filing: 12.08.2015
(51) Int. Cl.: G06F 12/14, G06F 21/14

(54) **DYNAMIC MEMORY ADDRESS REMAPPING IN COMPUTING SYSTEMS**
DYNAMISCHE SPEICHERADRESSENNEUZUORDNUNG IN COMPUTERSYSTEMEN
REMAPPAGE D'ADRESSES DE MÉMOIRE DYNAMIQUE DANS DES SYSTÈMES INFORMATIQUES

(30) Priority: 13.08.2014 US 201414459234
(43) Date of publication of application: 23.03.2016
(73) Proprietor: The Boeing Company, Chicago, IL 60606-1596 (US)
(72) Inventor: HARS, Laszlo, Chicago, IL 60606-2016 (US)
(74) Representative: Boult Wade Tennant LLP

(56) References cited:
- US-A1- 2003 163 718
- US-A1- 2010 106 920
- US-A1- 2012 297 110
- US-B1- 6 272 637

## Description

### BACKGROUND

In a computing system, traffic to system memory may be analyzed to observe memory access patterns. Sensitive information from these memory access patterns may be deduced.

Location of an event counter may be deduced from writing new data to an address in response to an event. Neighboring fields may have known values (e.g. leading zeros). This deduced information may be used for a cryptanalytic attack such as a key search attack or a power analysis attack.

Frequent, periodic updates might point to a loop counter. Sequential memory access, with occasional jumps and loops, may indicate program code. Certain access patterns may reveal matrix computations, image processing, database handling, etc. This deduced information can give the location of important targets for attacks.

Memory access patterns may also be analyzed to identify an executed algorithm in software, functionality of the software, or just a version of the software. This deduced information may enable known flaws in the software to be exploited.

US 2003/0163718 discloses a method and system of protecting mass data by mapping virtual addresses onto randomly or pseudo-randomly selected actual addresses. This mapping distributes data values throughout the memory.

### SUMMARY

The invention is set out in the appended set of claims. The dependent claims set out particular embodiments.

According to an embodiment herein, a method provides security in a computing system including a processor having a logical address space and external system memory having physical address space. The method comprises hiding memory access patterns, including dynamically remapping the logical address space to the physical address space in response to data accesses to the logical address space.

According to another embodiment herein, a computing system comprises a processor having logical address space, external system memory having physical address space, and a memory controller for hiding memory access patterns with respect to the external system memory. Hiding the memory access patterns includes dynamically remapping the logical address space to the physical address space in response to data accesses to the logical address space.

According to another embodiment herein, a memory controller for a computing system comprises a dedicated processor configured to hide memory access patterns with respect to external system memory of a computing system. Hiding the memory access patterns includes remapping a logical address from a first physical address of the external system memory to a second physical address of the external system memory in response to a data access to the logical address space; and sending data to the external system memory for storage at the second physical address.

Further, the disclosure comprises embodiments according to the following clauses:
Clause 1. A method of providing security in a computing system including a processor having a logical address space and external system memory having physical address space, the method comprising:
   hiding memory access patterns including dynamically remapping the logical address space to the physical address space in response to data accesses to the logical address space.
Clause 2. The method of clause 1, wherein the external system memory holds current programs and data that are in use, and communicates with the processor over a data path that is accessible to an attacker.
Clause 3. The method of clause 1, wherein the remapping is performed at each and every data access to the logical address space.
Clause 4. The method of clause 1, wherein each remapping includes remapping a logical address from first a physical address to a second physical address; and wherein hiding the memory access patterns further includes storing data at the second physical address.
Clause 5. The method of clause 1, wherein for each read operation at a logical address, data is read from a first physical address in the external system memory, the logical address is remapped from the first physical address to a second physical address, and the data is moved from the first physical address to the second physical address, yet the logical address is unchanged.
Clause 6. The method of clause 1, wherein for each write operation to a logical address, the logical address is remapped from a first physical address to a second physical address, and data is stored at the second physical address, yet the logical address is unchanged.
Clause 7. The method of clause 6, wherein each write operation is preceded by a dummy read operation, in which data is read from the first physical address but is not acted upon.
Clause 8. The method of clause 1, wherein the physical address space is larger than the logical address space by at least one physical address, whereby at least one physical address is unmapped; wherein a first data structure contains entry values for those physical addresses mapped to logical addresses; wherein a second data structure contains an entry value for each unmapped physical address; and wherein an entry value indexed in the first data structure is replaced by an entry value selected from the second data structure.
Clause 9. The method of clause 8, wherein each replaced entry value is added to the second data structure.
Clause 10. The method of clause 8, wherein each entry value in the second data structure is selected randomly or pseudorandomly.
Clause 11. The method of clause 8, wherein each entry value is an offset from a corresponding beginning address of a protected window of the external system memory.
Clause 12. A computing system comprising:
   a processor having logical address space;
   external system memory having physical address space; and
   a memory controller for hiding memory access patterns with respect to the external system memory, wherein hiding the memory access patterns includes dynamically remapping the logical address space to the physical address space in response to data accesses to the logical address space.
Clause 13. The computing system of clause 12, wherein the processor and the memory controller are on a die of a central processing unit.
Clause 14. The computing system of clause 12, wherein the computing system is a virtual machine having a hardware layer and virtual machine software that implement the memory controller.
Clause 15. The computing system of clause 12, wherein the computing system is a system-on-a-chip including a circuit that communicates with the external system memory; and wherein the circuit is configured to dynamically perform the memory address remapping.
Clause 16. The computing system of clause 15, wherein the circuit is a Secure Memory Transaction Unit.
Clause 17. The computing system of clause 12, wherein the memory controller is configured to perform the remapping at each and every data access to a logical address.
Clause 18. The computing system of clause 12, wherein the memory controller is configured to remap a logical address from first a physical address to a second physical address, and to store data at the second physical address.
Clause 19. The computing system of clause 12, wherein the physical address space is larger than the logical address space by at least one physical address, whereby at least one physical address is unmapped; wherein when a data access to a logical address is made, the logical address is already mapped to a first physical address via a first offset; and wherein the memory controller is configured to select a second offset to an unmapped second physical address, and replace the first offset with the second offset.
Clause 20. A memory controller for a computing system including external system memory, the memory controller comprising a dedicated processor configured to hide memory access patterns with respect to the external system memory, including remapping a logical address from a first physical address of the external system memory to a second physical address of the external system memory in response to a data access to the logical address space; and sending data to the external system memory for storage at the second physical address.

These features and functions may be achieved independently in various embodiments or may be combined in other embodiments. Further details of the embodiments can be seen with reference to the following description and drawings.

### BRIEF DESCRIPTION OF THE DRAWINGS

FIG. 1 is an illustration of a computing system that thwarts analysis of traffic to external system memory.
FIG. 2A is an illustration of a method of obfuscating a write operation to a logical address.
FIG. 2B is an illustration of a method of obfuscating a read operation to a logical address.
FIG. 2C is an illustration of another method of obfuscating a write operation to a logical address.
FIG. 3 is an illustration of data structures for remapping logical address space to physical address space.
FIG. 4 is an illustration of a method of using the data structures of FIG. 3 to perform the remapping.
FIGS. 5, 6 and 7 are illustrations of different examples of computing systems that thwart analysis of traffic to external system memory.

### DETAILED DESCRIPTION

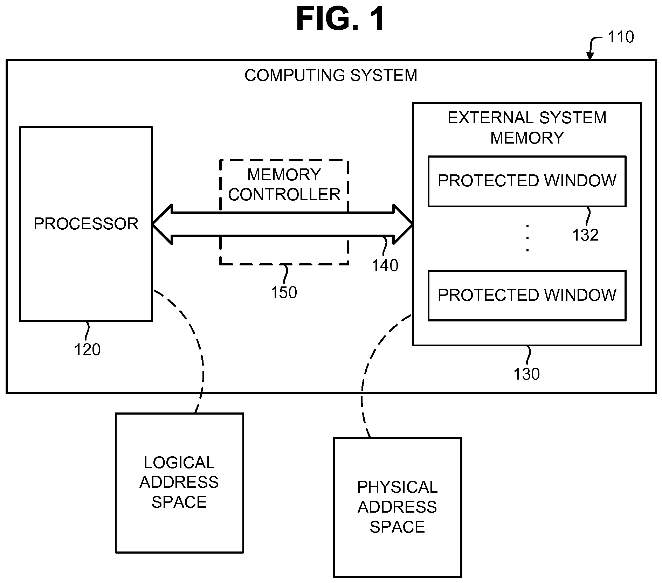

Reference is made to FIG. 1, which illustrates a computing system 110 including a processor 120. Examples of the pSocessor 120 include, but are not limited to, a central processing unit, a Direct Memory Access ("DMA") engine or other embedded processor, and an application-specific integrated circuit ("ASIC").

The computing system further includes external system memory 130, which communicates with the processor 120 via a data path 140. As used herein, "system memory" refers to memory where the computing system 110 holds current programs and data that are in use. Examples of system memory include volatile system memory such as dynamic random access memory ("DRAM") and non-volatile system memory such as magnetic random access memory ("MRAM"). The system memory does not include storage devices such as hard drives and Flash memory.

The system memory is considered "external" if traffic on the data path 140 can be accessed and observed by an attacker. As used herein, "traffic" refers to the communication information between the processor 120 and the external system memory 130. This communication information includes but is not limited to read/write signals, memory addresses, timing information, and data that is read from and written to the external system memory 130. The system memory may also include processor cache and registers. However, the processor cache and registers are not considered external if they cannot be accessed by an attacker.

The external system memory 130 stores data in protected windows 132. The data stored in the protected windows 132 is protected against traffic analysis. As used herein, a "protected window" refers to a single memory address or a range of contiguous addresses in the external system memory 130. In some instances, the protected data may be stored in a single protected window 132, which may cover a portion of the external system memory 130 or all of the external system memory 130. In other instances, the protected data may be stored in multiple protected windows 132, which may cover a portion of the external system memory 130 or all of the external system memory 130. The data stored in each protected window 132 may or may not be protected by other means (e.g., encryption and/or data authentication tags).

Physical address space is a set of ranges of physical addresses that the external system memory 130 utilizes for referencing data locations. The physical address space may also include addresses for memory other than the external system memory 130.

Logical address space is a set of ranges of logical addresses that the processor 120 utilizes for referencing data locations. For instance, a computer program works only with logical addresses.

The computing system 110 further includes a memory controller 150, which manages the flow of data to and from the external system memory 130. As part of managing the data flow, the memory controller 150 is configured to map and dynamically remap the logical address space to the physical address space of the external system memory 130. The memory controller 150 also translates logical addresses to physical addresses. That is, the memory controller 150 receives logical addresses from the processor 120, and sends corresponding (mapped) physical addresses to the external memory 130.

In FIG. 1, the memory controller 150 is shown in dashed lines to convey that it may be implemented in either the processing side of the computing system 110 or the memory side of the computing system 110. As examples of processing side implementation, the memory controller 150 may be located on a die of the processor 120, or it may be part of an operating system. As examples of memory side implementation, the memory controller 150 may be located on a substrate of the external system memory 130, or on a motherboard or other printed circuit board. Preferably, the memory controller 150 is integrated with the processor 120 (e.g., on the same die, as a protected multi-chip module, in firmware) where it is not accessible to an attacker. If the memory controller 150 is not integrated with the processor 120, communication lines with the processor 120 are protected against access by an attacker.

Observation and analysis of traffic on the data path 140 can reveal memory access patterns. This, in turn, might allow an attacker to gain insights about the data in the protected windows 132 and about actions of the processor 120.

The memory controller 150 is configured to thwart such traffic analysis by obfuscating the memory access patterns. The obfuscation includes dynamically remapping the logical address space of the processor 120 to the physical address space of the external system memory 130. The remapping is performed at data accesses to the logical address space. For instance, a remapping may be performed at a read or write to a logical address.

The obfuscation further includes storing data in the external system memory 130 after a remapping. For instance, after a logical address is remapped from a first physical address to a second physical address, data is stored at the second physical address.

For maximum protection against traffic analysis, the remapping may be performed at each and every data access to the logical address space. However, the remapping may be performed less frequently. In any event, the remapping is dynamic. For instance, the remapping is performed repeatedly while a program is running.

The remapping may not involve remapping the entire logical address space (that is, every logical address). Rather, the remapping may involve only the logical addresses that are designated for protection, and perhaps an additional subset of the logical address space.

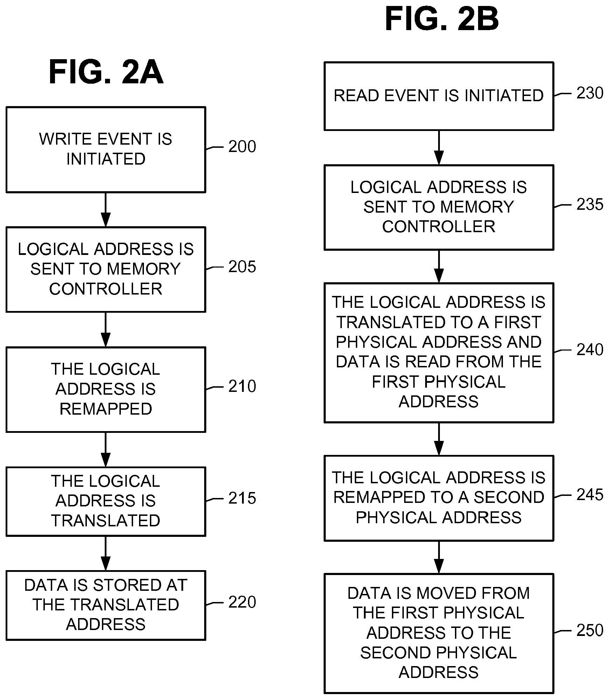

FIG. 2A illustrates an example of obfuscating a write operation to a logical address. At block 200, a write event is initiated. The write event may be initiated by the processor 120, a DMA engine, I/O or other active component of the computing system 110.

At block 205, a logical address, write flag and data are sent to the memory controller 150 as part of a write command. At this point in time, the logical address is mapped to a first physical address in the external system memory 130.

At block 210, the logical address is remapped. An unmapped second physical address is identified, and the logical address is remapped to that second physical address.

At block 215, the memory controller 150 translates the logical address to the second physical address. At block 220, the data is stored at the second physical address in the external system memory 130, yet the logical address is unchanged

FIG. 2B illustrates an example of obfuscating a read operation to a logical address. At block 230, a read event is initiated. At block 235, a logical address and read flag are sent to the memory controller 150. At block 240, the memory controller 150 translates the logical address to a first physical address, and the external system memory 130 sends data at that first physical address to the memory controller 150.

At block 245, the logical address is remapped. An unmapped second physical address is identified, and the logical address is remapped to that second physical address.

At block 250, the data is moved from the first physical address to the second physical address. Thus, after data is read from the external system memory 130, the data is moved to a new location in the external system memory 130, yet the logical address is unchanged.

In some configurations, the operations at blocks 245 and 250 may be performed automatically by the memory controller 150 after executing a read command issued by the processor 120. In other configurations, the processor 120 issues a read command followed by a write command, whereby the read command causes the memory controller 150 to perform the functions at blocks 235 and 240, and the write command causes the memory controller 150 to perform the functions at blocks 245 and 250.

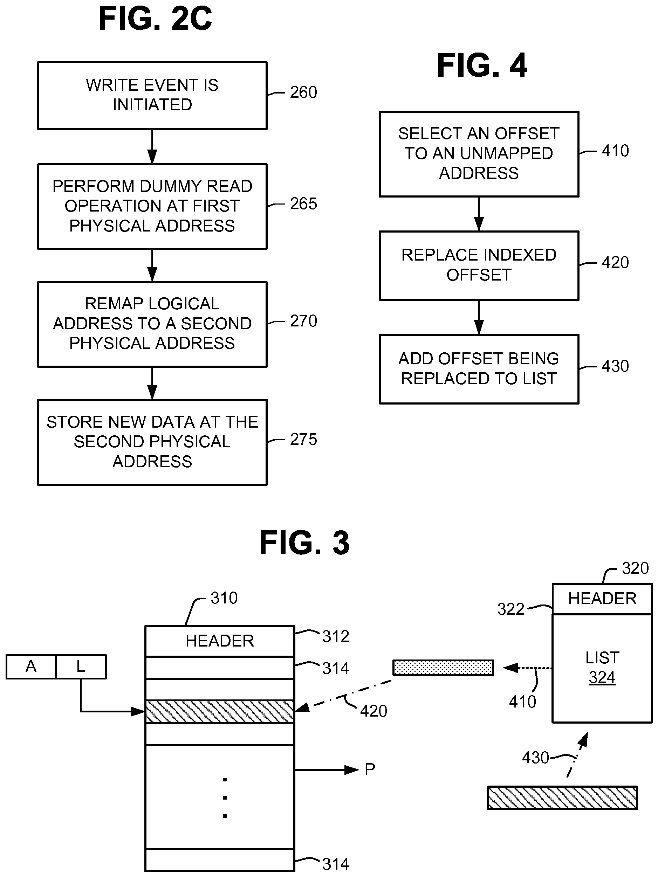

FIG. 2C illustrates another method of obfuscating a write operation. A write operation may be further obfuscated by automatically preceding it by one or more dummy read operations. At block 260, a write event is initiated. At block 265, a dummy read operation is performed. A logical address and a dummy read flag are sent to the memory controller 150, which translates the logical address to a first physical address, and retrieves data at that first physical address from the external system memory 130. Since the operation is a dummy read operation, the data is not acted upon, except that the memory controller 150 may check integrity and authenticity of the retrieved data.

The dummy read operation is followed by the write operation. At block 270, the logical address is remapped to a second physical address. At block 275, new data is written to the second physical address. If additional dummy read operations are performed, each dummy read operation (block 265) may be followed by a remapping (block 270) and writing of new data (block 275).

In these obfuscations, the physical addresses change, but the logical addresses do not change. Writing to the same logical address will cause data to be written to different physical addresses in the external system memory 130. In this manner, the memory address remapping is used to obfuscate memory access patterns.

Reference is now made to FIGS. 3 and 4. FIG. 3 illustrates an example of data structures for the mapping and remapping of logical address space to physical address space, and FIG. 4 illustrates an example of how the memory address remapping may be performed. The data structures in this example include first and second tables 310 and 320. A first table 310 and a second table 320 are provided for each protected window 132 in the external system memory 130. Each protected window 132 stores data. The smallest addressable unit of data may be a byte (8 bits), a memory page (e.g. 64 bytes), a ciphertext block (16 bytes), etc. These smallest addressable units will be referred to as "chunks."

Each first table 310 may include a header 312, which contains the starting logical address of its protected window 132. Each first table 310 may further includes as many entries 314 as there are chunks in the protected window 132.

The entries 314 are indexed by the logical address (e.g., the entire logic address or a portion of the logical address). For instance, a logical address has a base A and offset L. The first table 310 may be indexed by the offset L. The offset L points to an entry 314 whose value P enables a physical address to be determined. In some configurations, the values of the entries 314 may represent offsets of the physical addresses from the beginning of the protected window 132. In other configurations, the values of the entries 314 may represent absolute physical addresses, offsets from the beginning of a memory page, etc.

The second table 320 includes a header 322 and a list 324 of entry values for unmapped physical addresses. Each entry value enables its corresponding physical address to be determined. The physical address space is larger than the logical address space by at least one physical memory location. Therefore, at least one physical address will always be unmapped.

A remapping operation utilizes this second table 320. Consider an example in which the first and second tables 310 and 320 store values of offsets. At the start of a remapping operation, the offset L of the logical address points to an offset in the first table 310. The offset being indexed (represented by the box having a cross-hatched fill pattern) is referred to as the "first" offset.

At block 410, an offset to an unmapped physical address is selected from the list 324 in the second table 320 (this action is represented by the dash line in FIG. 3). The selected offset (represented by the box having a speckled fill pattern) is referred to as the "second" offset. The second offset may be selected randomly or pseudorandomly from the list 324.

At block 420, the first offset in the first table 310 is replaced with the second offset (this action is represented by the dot-dash line in FIG. 3). That is, the offset indexed by the logical address is replaced with the offset selected from the second table 320.

At block 430, the first offset is now added to the list 324 of offsets to unmapped addresses. This action is represented by the dot-dot-dash line in FIG. 3.

The remapping happens at the level of memory accesses. At this low level, there is no concept of programs.

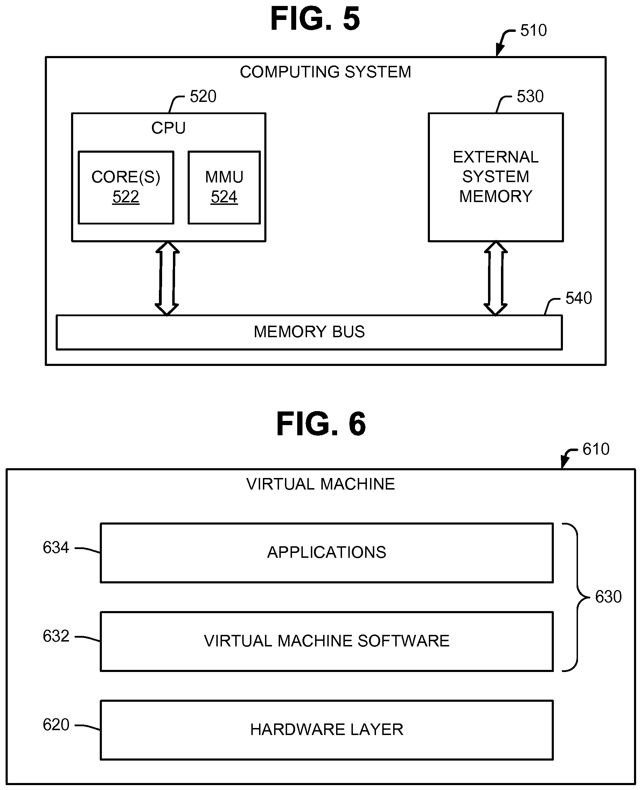

As mentioned above, the memory controller 150 may be implemented in the computing system 110 in various ways. FIGS. 5, 6 and 7 provide three examples.

FIG. 5 illustrates a computing system 510 including a central processing unit (CPU) 520 that communicates with external system memory 530 via a memory bus 540. The CPU 520 includes one or more cores 522 and a memory management unit (MMU) 524. The memory management unit 524 receives a logical address from the core(s) 522, and translates the logical address to a physical address, which is placed on the memory bus 540. The memory management unit 524 also performs dynamic memory address remapping as described above. The memory management unit 524 may include cache, registers, or other private memory for implementing the tables, and logic for controlling the address translation. The memory address remapping is independent of any caching scheme.

FIG. 6 illustrates a virtual machine 610 including a hardware layer 620 and a software layer 630. The software layer 630 includes virtual machine software 632, and application software 634. The virtual machine software 632 runs on the hardware layer 620 to map and remap the logical addresses used by the application software 634 to virtual addresses. The virtual addresses may be mapped to physical addresses either by the combination of the virtual machine software 632 and the hardware layer 620, or by a memory management unit in the hardware layer 620.

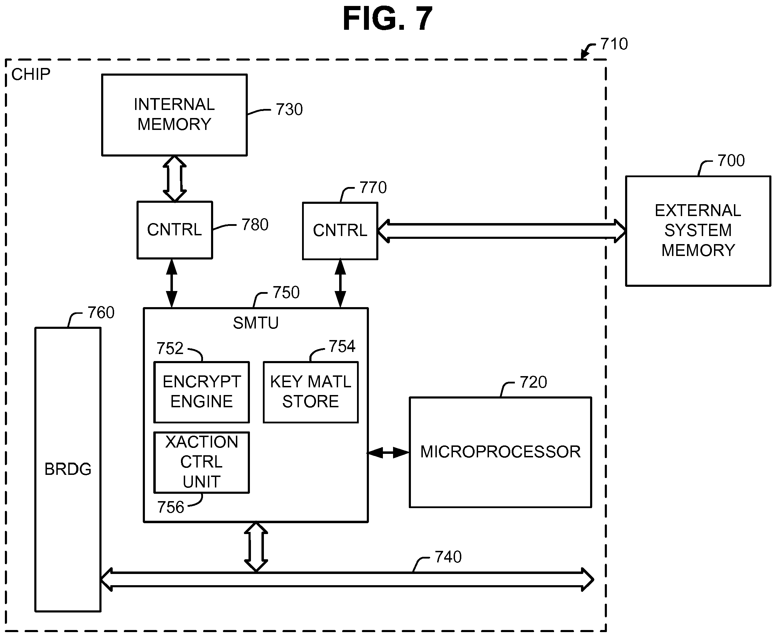

FIG. 7 illustrates a system-on-a-chip (SoC) architecture similar to the SoC architecture described in assignee's U.S. Publication No. 20130117577. The chip 710 communicates with off-chip external system memory 700. The chip 710 includes a microprocessor 720, volatile internal memory (e.g., EDRAM) 730, and a memory bus 740. Some configurations may follow a CoreConnect™ bus architecture for system-on-a-chip (SoC) designs, wherein the microprocessor 720 is a PowerPC core, and the memory bus 740 is a processor local bus (PLB).

The chip 710 also includes a dedicated circuit referred to as a secure memory transaction unit ("SMTU") 750. The SMTU 750 communicates directly with the microprocessor 720, and it communicates with a bridge 760 via the memory bus 740. The SMTU 750 communicates with the external system memory 700 via a first memory controller 770, and it communicates with the internal memory 730 via a second memory controller 780.

The SMTU 750 provides an encryption and authentication engine 752 for encrypting and authenticating data stored in the external system memory 700. Dedicated memory referred to as a key material store 754 is used to store key material for the encryption and authentication. The SMTU 750 may act as a slave unit serving read and write requests initiated by the microprocessor 720 or by units coupled to the bridge 760.

The address translation and dynamic memory address remapping may be performed by the SMTU 750. For example, the SMTU 750 may include a transaction control unit 756 for identifying protected windows in the external system memory, and deciding how data stored in those windows are protected. The transaction control unit 756 may also perform the address translation and the dynamic memory address remapping. If the remapping utilizes data structures such as tables, the tables may be stored in the internal memory 730.

In other configurations, the address translation and dynamic memory address remapping may be performed by the first memory controller 770. In still other configurations, the microprocessor 720 may be programmed to perform the address translation and dynamic memory address remapping.

A computing system herein is not limited to any particular usage. Examples include flight computers, personal computers, work stations, laptop computers, and smart mobile devices.

## Claims

1. A method of providing security in a computing system (110) including a processor (120) having a logical address space and external system memory (130, 530, 700) having physical address space, the method comprising:
hiding memory access patterns including dynamically remapping the logical address space to the physical address space in response to data accesses to the logical address space,
wherein the remapping is performed at each and every data access to the logical address space, and
wherein each remapping includes remapping a logical address from a first physical address to a second physical address; and wherein hiding the memory access patterns further includes storing data at the second physical address,
the method **characterized in that**:
the physical address space is larger than the logical address space by at least one physical address, whereby at least one physical address is unmapped;
wherein a first data structure contains entry values for those physical addresses mapped to logical addresses;
wherein a second data structure contains an entry value for each unmapped physical address;
and wherein an entry value indexed in the first data structure is replaced by an entry value selected from the second data structure and wherein each replaced entry value is added to the second data structure and each entry value is selected randomly or pseudorandomly,
and wherein each entry value is an offset from a corresponding beginning address of a protected window of the external system memory (130, 530, 700).

2. The method of claim 1, wherein for each read operation at a logical address, data is read from a first physical address in the external system memory (130, 530, 700), the logical address is remapped from the first physical address to a second physical address, and the data is moved from the first physical address to the second physical address, yet the logical address is unchanged.

3. The method of claim 1, wherein each write operation is preceded by a dummy read operation, in which data is read from the first physical address but is not acted upon, and for each write operation to a logical address, the logical address is remapped from a first physical address to a second physical address, and data is stored at the second physical address, yet the logical address is unchanged.

4. A computing system (110) comprising:
a processor (120) having logical address space;
external system memory (130, 530, 500) having physical address space; and
a memory controller 150 for hiding memory access patterns with respect to the external system memory (130, 530, 700),
wherein hiding the memory access patterns includes dynamically remapping the logical address space to the physical address space in response to data accesses to the logical address space,
wherein the memory controller (150) is configured to perform the remapping at each and every data access to a logical address, and
wherein the memory controller 150 is configured to remap a logical address from first a physical address to a second physical address, and to store data at the second physical address,
the system **characterized in that**:
the physical address space is larger than the logical address space by at least one physical address, whereby at least one physical address is unmapped;
wherein a first data structure contains entry values for those physical addresses mapped to logical addresses;
wherein a second data structure contains an entry value for each unmapped physical address;
and wherein an entry value indexed in the first data structure is replaced by an entry value selected from the second data structure and wherein each replaced entry value is added to the second data structure and each entry value is selected randomly or pseudorandomly,
and wherein each entry value is an offset from a corresponding beginning address of a protected window of the external system memory (130, 530, 700).

5. The computing system (110) of claim 4, wherein the processor (120) and the memory controller (150) are on a die of a central processing unit (520).

6. The computing system (110) of claim 4 or 5, wherein the computing system (110) is a virtual machine (610) having a hardware layer (620) and virtual machine software (632) that implement the memory controller (150).

7. The computing system (110) of any one of claims 4 to 6, wherein the computing system (110) is a system-on-a-chip (710) including a circuit (750) that communicates with the external system memory (130, 530, 700); and wherein the circuit (750) is configured to dynamically perform the memory address remapping.

8. The computing system of any of claims 4 to 7, wherein the physical address space is larger than the logical address space by at least one physical address, whereby at least one physical address is unmapped; wherein when a data access to a logical address is made, the logical address is already mapped to a first physical address via a first offset L;
and wherein the memory controller (150) is configured to select a second offset to an unmapped second physical address, and replace the first offset L with the second offset.

9. The computing system (110) of claim 4, wherein the processor (120) is configured to hide memory access patterns with respect to the external system memory (130, 150, 700), by remapping a logical address from a first physical address of the external system memory to a second physical address of the external system memory (130, 150, 700) in response to a data access to the logical address space; and sending data to the external system memory (130 150, 700) for storage at the second physical address.

## Patentansprüche

1. Verfahren zum Absichern eines Computersystems (110), das einen Prozessor (120) mit einem logischen Adressraum und einen externen Systemspeicher (130, 530, 700) mit einem physikalischen Adressraum beinhaltet, wobei das Verfahren umfasst:
Verstecken von Speicherzugriffsmustern, einschließlich des dynamischen Neuabbildens des logischen Adressraums auf den physikalischen Adressraum als Reaktion auf Datenzugriffe auf den logischen Adressraum,
wobei das Neuabbilden bei jedem einzelnen Datenzugriff auf den logischen Adressraum durchgeführt wird, und
wobei jedes Neuabbilden das Neuabbilden einer logischen Adresse von einer ersten physikalischen Adresse auf eine zweite physikalische Adresse beinhaltet; und wobei das Verstecken der Speicherzugriffsmuster ferner das Speichern von Daten an der zweiten physikalischen Adresse beinhaltet,
wobei das Verfahren **dadurch gekennzeichnet ist, dass**:
der physikalische Adressraum um mindestens eine physikalische Adresse größer ist als der logische Adressraum, wobei mindestens eine physikalische Adresse nicht abgebildet ist;
wobei eine erste Datenstruktur Eingabewerte für jene physikalischen Adressen enthält, die auf logische Adressen abgebildet sind;
wobei eine zweite Datenstruktur einen Eingabewert für jede nicht abgebildete physikalische Adresse enthält;
und wobei ein in der ersten Datenstruktur indexierter Eingabewert durch einen aus der zweiten Datenstruktur ausgewählten Eingabewert ersetzt wird und wobei jeder ersetzte Eingabewert zu der zweiten Datenstruktur hinzugefügt wird und jeder Eingabewert zufällig oder pseudozufällig ausgewählt wird,
und wobei jeder Eingabewert ein Offset zu einer entsprechenden Anfangsadresse eines geschützten Fensters des externen Systemspeichers (130, 530, 700) ist.

2. Verfahren nach Anspruch 1, bei dem für jeden Lesevorgang an einer logischen Adresse Daten von einer ersten physikalischen Adresse im externen Systemspeicher (130, 530, 700) gelesen werden, die logische Adresse von der ersten physikalischen Adresse auf eine zweite physikalische Adresse neu abgebildet wird und die Daten von der ersten physikalischen Adresse auf die zweite physikalische Adresse verschoben werden, obwohl die logische Adresse unverändert bleibt.

3. Verfahren nach Anspruch 1, bei dem jedem Schreibvorgang ein Dummy-Lesevorgang vorausgeht, bei dem Daten von der ersten physikalischen Adresse gelesen, aber nicht bearbeitet werden, und bei jedem Schreibvorgang auf eine logische Adresse die logische Adresse von einer ersten physikalischen Adresse auf eine zweite physikalische Adresse neu abgebildet wird und Daten an der zweiten physikalischen Adresse gespeichert werden, obwohl die logische Adresse unverändert bleibt.

4. Computersystem (110), umfassend:
einen Prozessor (120) mit einem logischen Adressraum;
externen Systemspeicher (130, 530, 500) mit physikalischem Adressraum; und
eine Speichersteuerung 150 zum Verstecken von Speicherzugriffsmustern in Bezug auf den externen Systemspeicher (130, 530, 700),
wobei das Verstecken der Speicherzugriffsmuster das dynamische Neuabbilden des logischen Adressraums auf den physikalischen Adressraum als Reaktion auf Datenzugriffe auf den logischen Adressraum beinhaltet,
wobei die Speichersteuerung (150) eingerichtet ist, um die Neuabbildung bei jedem einzelnen Datenzugriff auf eine logische Adresse durchzuführen, und
wobei die Speichersteuerung 150 eingerichtet ist, um eine logische Adresse von einer ersten physikalischen Adresse auf eine zweite physikalische Adresse neu abzubilden und Daten an der zweiten physikalischen Adresse zu speichern,
wobei das System **dadurch gekennzeichnet ist, dass**:
der physikalische Adressraum um mindestens eine physikalische Adresse größer ist als der logische Adressraum, wobei mindestens eine physikalische Adresse nicht abgebildet ist;
wobei eine erste Datenstruktur Eingabewerte für jene physikalischen Adressen enthält, die auf logische Adressen abgebildet sind;
wobei eine zweite Datenstruktur einen Eingabewert für jede nicht abgebildete physikalische Adresse enthält;
und wobei ein in der ersten Datenstruktur indexierter Eingabewert durch einen aus der zweiten Datenstruktur ausgewählten Eingabewert ersetzt wird und wobei jeder ersetzte Eingabewert zu der zweiten Datenstruktur hinzugefügt wird und jeder Eingabewert zufällig oder pseudozufällig ausgewählt wird,
und wobei jeder Eingabewert ein Offset zu einer entsprechenden Anfangsadresse eines geschützten Fensters des externen Systemspeichers (130, 530, 700) ist.

5. Computersystem (110) nach Anspruch 4, bei dem der Prozessor (120) und die Speichersteuerung (150) sich auf einem Chip einer zentralen Verarbeitungseinheit (520) befinden.

6. Computersystem (110) nach Anspruch 4 oder 5, bei dem das Computersystem (110) eine virtuelle Maschine (610) mit einer Hardware-Schicht (620) und einer Software für virtuelle Maschinen (632) ist, die die Speichersteuerung (150) implementieren.

7. Computersystem (110) nach einem der Ansprüche 4 bis 6, bei dem das Computersystem (110) ein Ein-Chip-System (710) ist, das eine Schaltung (750) beinhaltet, die mit dem externen Systemspeicher (130, 530, 700) in Verbindung steht; und bei dem die Schaltung (750) konfiguriert ist, um die Neuabbildung der Speicheradresse dynamisch durchzuführen.

8. Computersystem nach einem der Ansprüche 4 bis 7, bei dem der physikalische Adressraum um mindestens eine physikalische Adresse größer ist als der logische Adressraum, wobei mindestens eine physikalische Adresse nicht abgebildet ist; wobei, wenn ein Datenzugriff auf eine logische Adresse erfolgt, die logische Adresse bereits über einen ersten Offset L auf eine erste physikalische Adresse abgebildet ist;
und bei dem die Speichersteuerung (150) eingerichtet ist, um einen zweiten Offset zu einer nicht abgebildeten zweiten physikalischen Adresse auszuwählen und den ersten Offset L durch den zweiten Offset zu ersetzen.

9. Computersystem (110) nach Anspruch 4, bei dem der Prozessor (120) konfiguriert ist, um Speicherzugriffsmuster in Bezug auf den externen Systemspeicher (130, 150, 700) zu verbergen, indem als Reaktion auf einen Datenzugriff auf den logischen Adressraum eine logische Adresse von einer ersten physikalischen Adresse des externen Systemspeichers auf eine zweite physikalische Adresse des externen Systemspeichers (130, 150, 700) neu abgebildet wird; und Daten an den externen Systemspeicher (130, 150, 700) zum Speichern an der zweiten physikalischen Adresse übertragen werden.

## Revendications

1. Procédé de fourniture de sécurité dans un système informatique (110) incluant un processeur (120) présentant un espace d'adresse logique et une mémoire de système externe (130, 530, 700) présentant un espace d'adresse physique, le procédé comprenant les étapes ci-dessous consistant à :
masquer des motifs d'accès mémoire, et notamment remapper de manière dynamique l'espace d'adresse logique avec l'espace d'adresse physique en réponse à des accès de données au niveau de l'espace d'adresse logique ;
dans lequel l'étape de remappage est mise en oeuvre à chaque accès de données au niveau de l'espace d'adresse logique ; et
dans lequel chaque étape de remappage consiste à remapper une adresse logique d'une première adresse physique à une seconde adresse physique ; et dans lequel l'étape de masquage des motifs d'accès mémoire comprend en outre l'étape consistant à stocker des données au niveau de la seconde adresse physique ;
le procédé étant **caractérisé en ce que** :
l'espace d'adresse physique est plus grand que l'espace d'adresse logique, d'au moins une adresse physique, moyennant quoi au moins une adresse physique n'est pas mappée ;
dans lequel une première structure de données contient des valeurs d'entrée pour les adresses physiques mappées avec des adresses logiques ;
dans lequel une seconde structure de données contient une valeur d'entrée pour chaque adresse physique non mappée ; et
dans lequel une valeur d'entrée indexée dans la première structure de données est remplacée par une valeur d'entrée sélectionnée à partir de la seconde structure de données, et dans lequel chaque valeur d'entrée remplacée est ajoutée à la seconde structure de données et chaque valeur d'entrée est sélectionnée de manière aléatoire ou pseudo-aléatoire ; et
dans lequel chaque valeur d'entrée correspond à un décalage par rapport à une adresse de début correspondante d'une fenêtre protégée de la mémoire de système externe (130, 530, 700).

2. Procédé selon la revendication 1, dans lequel, pour chaque opération de lecture au niveau d'une adresse logique, des données sont lues à partir d'une première adresse physique dans la mémoire de système externe (130, 530, 700), l'adresse logique est remappée de la première adresse physique à une seconde adresse physique, et les données sont déplacées de la première adresse physique à la seconde adresse physique, mais l'adresse logique demeure inchangée.

3. Procédé selon la revendication 1, dans lequel chaque opération d'écriture est précédée d'une opération de lecture factice, dans laquelle des données sont lues à partir de la première adresse physique, mais elles ne sont pas traitées, et pour chaque opération d'écriture vers une adresse logique, l'adresse logique est remappée d'une première adresse physique à une seconde adresse physique, et des données sont stockées au niveau de la seconde adresse physique, mais l'adresse logique demeure inchangée.

4. Système informatique (110) comprenant :
un processeur (120) présentant un espace d'adresse logique ;
une mémoire de système externe (130, 530, 500) présentant un espace d'adresse physique ; et
un contrôleur de mémoire (150) destiné à masquer des motifs d'accès mémoire par rapport à la mémoire de système externe (130, 530, 700) ;
dans lequel l'étape consistant à masquer les motifs d'accès mémoire inclut l'étape consistant à remapper de manière dynamique l'espace d'adresse logique avec l'espace d'adresse physique en réponse à des accès de données au niveau de l'espace d'adresse logique ;
dans lequel le contrôleur de mémoire (150) est configuré de manière à mettre en oeuvre le remappage à chaque accès de données au niveau d'une adresse logique ; et
dans lequel le contrôleur de mémoire (150) est configuré de manière à remapper une adresse logique d'une première adresse physique à une seconde adresse physique, et à stocker des données au niveau de la seconde adresse physique ;
le système étant **caractérisé en ce que** :
l'espace d'adresse physique est plus grand que l'espace d'adresse logique, d'au moins une adresse physique, moyennant quoi au moins une adresse physique n'est pas mappée ;
dans lequel une première structure de données contient des valeurs d'entrée pour les adresses physiques mappées avec des adresses logiques ;
dans lequel une seconde structure de données contient une valeur d'entrée pour chaque adresse physique non mappée ; et
dans lequel une valeur d'entrée indexée dans la première structure de données est remplacée par une valeur d'entrée sélectionnée à partir de la seconde structure de données, et dans lequel chaque valeur d'entrée remplacée est ajoutée à la seconde structure de données et chaque valeur d'entrée est sélectionnée de manière aléatoire ou pseudo-aléatoire ; et
dans lequel chaque valeur d'entrée correspond à un décalage par rapport à une adresse de début correspondante d'une fenêtre protégée de la mémoire de système externe (130, 530, 700).

5. Système informatique (110) selon la revendication 4, dans lequel le processeur (120) et le contrôleur de mémoire (150) sont sur une matrice d'une unité centrale de traitement (520).

6. Système informatique (110) selon la revendication 4 ou 5, dans lequel le système informatique (110) est une machine virtuelle (610) présentant une couche matérielle (620) et un logiciel de machine virtuelle (632) qui mettent en oeuvre le contrôleur de mémoire (150).

7. Système informatique (110) selon l'une quelconque des revendications 4 à 6, dans lequel le système informatique (110) est un système sur puce (710) incluant un circuit (750) qui communique avec la mémoire de système externe (130, 530, 700) ; et dans lequel le circuit (750) est configuré de manière à mettre en oeuvre de façon dynamique le remappage d'adresse mémoire.

8. Système informatique selon l'une quelconque des revendications 4 à 7, dans lequel l'espace d'adresse physique est plus grand que l'espace d'adresse logique, d'au moins une adresse physique, moyennant quoi au moins une adresse physique est non mappée ; dans lequel, lorsqu'un accès de données au niveau d'une adresse logique est réalisé, l'adresse logique est déjà mappée avec une première adresse physique par l'intermédiaire d'un premier décalage « L » ; et
dans lequel le contrôleur de mémoire (150) est configuré de manière à sélectionner un second décalage au niveau d'une seconde adresse physique non mappée, et à remplacer le premier décalage « L » par le second décalage.

9. Système informatique (110) selon la revendication 4, dans lequel le processeur (120) est configuré de manière à masquer des motifs d'accès mémoire par rapport à la mémoire de système externe (130, 150, 700), en remappant une adresse logique, d'une première adresse physique de la mémoire de système externe à une seconde adresse physique de la mémoire de système externe (130, 150, 700) en réponse à un accès de données au niveau de l'espace d'adresse logique, et à envoyer des données à la mémoire de système externe (130, 150, 700) à des fins de stockage au niveau de la seconde adresse physique.
